# EUROPEAN PATENT APPLICATION

(11) **EP 4 714 866 A1**
(43) Date of publication of application: **25.03.2026**
(21) Application number: 25162910.1
(22) Date of filing: 11.03.2025
(51) Int. Cl.: B65G 1/04

(54) **SCHEDULING METHOD FOR FOUR-WAY SHUTTLE DENSE STORAGE SYSTEM WITHOUT CONVEYOR LINE AND WAREHOUSING SYSTEM**

(30) Priority: 16.12.2024 CN 202411852119; 23.09.2024 CN 202411323891
(71) Applicant: Zikoo Smart Technology Co., Ltd., Suzhou, Jiangsu Province (TW)
(72) Inventor: CAI, Chuanyu, Suzhou, Jiangsu Province (TW); WANG, Xin, Suzhou, Jiangsu Province (TW)
(74) Representative: Becker, Eberhard

(57) **Abstract**

A scheduling method for a four-way shuttle dense storage system without a conveyor line and a warehousing system: a vertical two-way shuttle (4, 56) is used to implement up- and-down movements of goods (55) within a single slot and carry out tier switching in vertical space. The vertical two-way shuttle (4, 56) is directly connected to a subtrack of a rack so that a four-way shuttle (11, 57) can get in and out of the vertical two-way shuttle (4, 56) freely, thereby flexibly implementing automatic inbound and outbound functions for palletized goods. In this application, any conveyor line is removed, and a highly flexible four-way shuttle (11, 57) can be directly used to implement docking with inbound and outbound positions and implement dense storage without any conveyor line. This not only omits installation and electrical control commissioning of conveyor equipment, but also simplifies an on-site implementation process, reduces construction costs, and shortens a construction period.

## Description

### BACKGROUND

### Technical Field

This application relates to the field of warehousing management technologies, and specifically, to a scheduling method for a four-way shuttle dense storage system without a conveyor line and a warehousing system.

### Description of Related Art

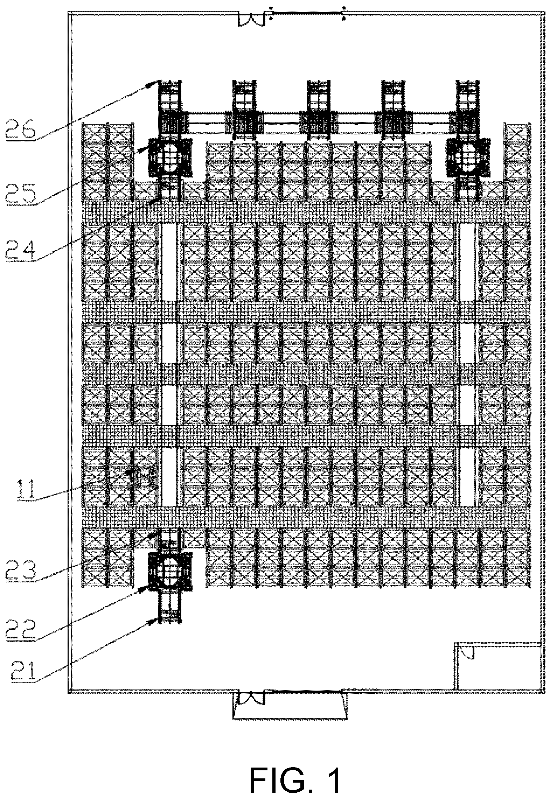

An existing four-way shuttle-based warehousing system usually employs a layout mode shown in FIG. 1: The system implements automated inbound and outbound functions for goods by using a conveyor line at both inbound and outbound ports. In an inbound process, goods are manually placed on the inbound conveyor line, which automatically conveys the goods forward to an elevator. The elevator lifts the goods to a designated rack tier, and then conveys the goods out of the elevator to an inbound conveyor line docking position so that a four-way shuttle finally carries the goods to a designated position. In an outbound process, a four-way shuttle lifts and carries outbound goods to a docking conveyor line in front of an outbound elevator. The conveyor line conveys the goods to the elevator, which lowers the goods to the first rack tier. The conveyor line then automatically conveys the goods forward to the outbound port for manual outbound or picking actions.

In the existing warehousing system, a docking conveyor line is installed between an elevator and each tier of a dense storage system rack, and conveyor lines are also connected between the elevator and both the inbound and outbound ports, thereby implementing automatic transfer and conveyance of goods. Therefore, during a project implementation phase, a significant amount of manual labor is required for mechanical installation, electrical wiring, and electrical control commissioning of the conveyor lines and elevators. Additionally, during an on-site construction phase, mechanical, electrical, and research and development personnel need to collaborate to complete installation and commissioning of conveyor equipment. A project implementation is long and costs for project implementation are high.

In addition, in conveyor line-based solutions, logistics flow lines for inbound and outbound processing are relatively limited, with low robustness in conveying path selection and insufficient system flexibility. Once a project is implemented, it becomes difficult to adjust later. Any change in customer requirements or inbound and outbound positions will result in high modification costs.

### SUMMARY

In view of deficiencies in conventional technologies, this application provides a scheduling method for a four-way shuttle dense storage system without a conveyor line. In this application, a pallet-on four-way shuttle is used to replace a conventional conveyor line, so that movement and transfer of goods are all completed by the four-way shuttle. Moreover, a vertical two-way shuttle is used to replace a conventional elevator to implement both tier-switching carry of goods and the four-way shuttle at the same time. The four-way shuttle in cooperation with the vertical two-way shuttle implements six-directional movement of palletized materials in a dense storage system. Such implementation can more flexibly implement automatic inbound and outbound functions of palletized goods, make full use of warehouse space of a factory, and increase the number of effective warehousing positions. The system designed without a conveyor line in this application can effectively improve flexibility of an automated warehouse system, facilitate easier deployment, and reduce construction period and implementation costs while meeting warehousing requirements. This application specifically uses the following technical solutions.

First, to achieve the foregoing objectives, a scheduling method for a four-way shuttle dense storage system without a conveyor line is proposed, where inbound steps include: when goods are carried to an inbound port, scheduling a four-way shuttle to carry the goods at the inbound port onto a vertical two-way shuttle in a dense storage system, so that the vertical two-way shuttle lifts the goods to a designated tier of a rack; and scheduling a four-way shuttle at the corresponding tier of the dense storage system rack to retrieve the goods conveyed by the vertical two-way shuttle, and transferring the goods to a designated storage position in the dense storage rack for storage;
outbound steps include: scheduling a four-way shuttle running at a storage tier corresponding to target goods in the dense storage system rack to retrieve the goods from a storage position of the goods, and transferring the goods to a vertical two-way shuttle, so that the vertical two-way shuttle transfers the goods to the first rack tier; and scheduling a four-way shuttle at the first rack tier to retrieve the goods conveyed by the vertical two-way shuttle, and carrying the goods to an outbound port for manual outbound processing.

Optionally, in the scheduling method for a four-way shuttle dense storage system without a conveyor line according to any one of the foregoing implementations, before the goods for inbound processing are carried to the inbound port, the method further includes: scanning a code of a pallet for the goods and a material code of the goods, and binding the pallet code with the material code. Generally, a warehouse keeper binds the pallet code with the material code based on the code of the pallet for the goods and the material code of the goods that are scanned by using a handheld terminal.

Optionally, in the scheduling method for a four-way shuttle dense storage system without a conveyor line according to any one of the foregoing implementations, when the goods are carried to the inbound port, the goods are placed on a material rack at the inbound port; and the material rack at the inbound port is independent of the rack; and the material rack is independent of the rack, and the material rack is further provided with a material rack subtrack interconnected with a subtrack in the rack, and the four-way shuttle is capable of running between the subtrack of the rack and the material rack subtrack.

Optionally, in the scheduling method for a four-way shuttle dense storage system without a conveyor line according to any one of the foregoing implementations, after being manually placed in the material rack at the inbound port, the goods are lifted and carried away from the inbound port by the four-way shuttle, and the system automatically assigns a storage position to the goods after weighting, code scanning, and dimensional inspection are performed without errors found, so that the four-way shuttle carries the goods for storage.

Optionally, in the scheduling method for a four-way shuttle dense storage system without a conveyor line according to any one of the foregoing implementations, if the assigned storage position is located at the first tier at the bottom of the rack, the four-way shuttle at the first tier of the rack is directly driven to carry the goods to the storage position. The four-way shuttle can directly carry the goods to the designated position for storage without using a vertical two-way shuttle.

Optionally, in the scheduling method for a four-way shuttle dense storage system without a conveyor line according to any one of the foregoing implementations, if the assigned storage position is above the first tier of the rack, the four-way shuttle at the first tier of the rack is firstly driven to carry the goods to a vertical two-way shuttle, then the vertical two-way shuttle lifts and carries the goods to a corresponding tier, and finally a four-way shuttle at the tier carries the goods to the storage position.

Optionally, in the scheduling method for a four-way shuttle dense storage system without a conveyor line according to any one of the foregoing implementations, when continuous inbound processing is needed for goods, the four-way shuttle at the first tier is driven to continuously carry the goods for inbound processing from the inbound port to an inbound buffer position between the inbound port and a vertical two-way shuttle, and after the vertical two-way shuttle reaches the first tier, a four-way shuttle inside the vertical two-way shuttle carries the goods to the vertical two-way shuttle.

Optionally, in the scheduling method for a four-way shuttle dense storage system without a conveyor line according to any one of the foregoing implementations, the four-way shuttle at the first tier carries the goods from the inbound port to the inbound buffer position at the first tier. In this solution, another buffer position may also be arranged based on requirements so as to buffer inbound materials.

Optionally, in the scheduling method for a four-way shuttle dense storage system without a conveyor line according to any one of the foregoing implementations, a designated storage position in a three-dimensional rack for goods is queried based on outbound goods requirements, a four-way shuttle at a tier corresponding to the designated storage position in the dense storage system rack is triggered; and if the goods for outbound processing are located at the first tier of the rack, the four-way shuttle at the first tier of the rack is directly driven to carry the goods directly from the corresponding storage position to the outbound port; or
if the goods for outbound processing are above the first tier of the rack, the four-way shuttle at the tier is first driven to carry the goods from the storage position to the vertical two-way shuttle, the vertical two-way shuttle carries and lowers the goods to the first tier of the rack, and the four-way shuttle at the first tier carries the goods to the outbound port.

Optionally, in the scheduling method for a four-way shuttle dense storage system without a conveyor line according to any one of the foregoing implementations, the outbound port is the material rack independent of the dense storage system rack structure, and the material rack subtrack is connected to the subtrack of the rack. After the four-way shuttle carries the outbound goods to the outbound port, outbound operations are completed by manual labor by operating a handheld terminal device.

Optionally, in the scheduling method for a four-way shuttle dense storage system without a conveyor line according to any one of the foregoing implementations, when continuous outbound processing is needed for goods while the goods at the outbound port have not been manually carried away, the four-way shuttle inside the vertical two-way shuttle is driven to carry the goods from the vertical two-way shuttle to an outbound buffer position, and after the outbound port is released, the four-way shuttle at the first tier carries the goods in the outbound buffer position to the outbound port, thereby implementing fast continuous outbound processing.

Optionally, in the scheduling method for a four-way shuttle dense storage system without a conveyor line according to any one of the foregoing implementations, when picking for outbound processing is needed, the goods are firstly carried to the outbound port for manual packing, and after the picking is complete, the inbound steps are executed reversely at the outbound port, and materials to be returned for storage are carried by the four-way shuttle and returned to the warehouse for storage; where
the outbound port used for picking is a position extending outwardly from the first tier of the rack or a travel path extending outwardly from a main aisle. Such implementation can ensure that staff can carry and pick palletized materials from three directions of a pallet during picking operations.

In addition, to achieve the foregoing objectives, this application provides a warehousing system, including: a rack, where the rack is provided with a plurality of tiers of storage positions, and the storage positions are connected by using a track; an inbound port, configured to receive goods for execution of the inbound steps according to any implementation described above; an outbound port, configured to receive goods for execution of the outbound steps according to any implementation described above; vertical two-way shuttles, configured to lift goods and four-way shuttles to a designated tier of the rack; and the four-way shuttles, distributed at the tiers of the rack and configured to carry goods between the inbound port, the vertical two-way shuttles, the outbound port, and the storage positions.

Optionally, in the warehousing system according to any one of the foregoing implementations further includes:
a material rack, where the material rack is independent of the rack and is provided with a material rack subtrack interconnected with a subtrack in the rack, and the four-way shuttle is capable of running between the subtrack of the rack and the material rack subtrack to execute the inbound and/or outbound steps;
an inbound buffer position, disposed between the inbound port and a vertical two-way shuttle, and configured to receive goods for inbound processing that are input from the inbound port, so that after the vertical two-way shuttle reaches the first tier, a four-way shuttle inside the vertical two-way shuttle carries the goods to the vertical two-way shuttle, and the vertical two-way shuttle lifts the goods to a corresponding tier; and
an outbound buffer position, disposed between a vertical two-way shuttle and the outbound port, and configured to receive goods output by the vertical two-way shuttle, so that after the outbound port is released, a four-way shuttle at the first tier carries the goods in the outbound buffer position to the outbound port.

The solution and layout for the inbound port, the inbound buffer position, another buffer position, the outbound port, the outbound buffer position, and the vertical two-way shuttle may be adjusted based on actual project requirements. The four-way shuttle and the vertical two-way shuttle separately carry goods based on the foregoing method for moving up and down the rack.

This application provides a vertical two-way shuttle, which is applied to the warehousing system according to any implementation described above. The vertical two-way shuttle occupies space of only a single position, and warehousing utilization is very high. Using a rack column as a main bearing member can implement up-and-down movements of a device inside a dense storage system, thereby greatly reducing investment costs and an installation period.

This application further provides a four-way shuttle, which is applied to the warehousing system according to any implementation described above. The four-way shuttle may perform tier-switching operations through a vertical two-way shuttle.

### BENEFICIAL EFFECTS

With respect to the layout in the four-way shuttle dense storage system solution without a conveyor line, the pallet four-way shuttle is used to replace a pallet conveyor, and the vertical two-way shuttle is used to replace an elevator, so that the four-way shuttle is used to automatically carry goods between the vertical two-way shuttle and each of the inbound and outbound ports. The vertical two-way shuttle occupies space of only a single position, thereby effectively increasing warehousing density. In addition, a plurality of buffer positions may be optionally arranged near the vertical two-way shuttle and the inbound and outbound ports, so as to alleviate system scheduling load and improve warehousing efficiency during centralized inbound and outbound processing. A picking station with three-sided access is arranged at the inbound and outbound port for picking to facilitate picking operations by warehouse workers. The system has high flexibility, and allows for adding or removing four-way shuttles and vertical two-way shuttles based on any changes in a customer's on-site efficiency requirements, thereby adapting to actual use requirements. When an on-site logistics flow line is adjusted and locations of the inbound and outbound ports are changed, a function change can be implemented through simple frame relocation and software system adjustment, so that easy modification and fast project delivery can be achieved when a warehouse requirement is changed in a later phase. During a project implementation phase, no participation from conveyor hardware installation personnel and conveyor electrical control personnel is needed, a project implementation period is short, and costs are low.

Other features and advantages of this application are set forth in the following specification, and some of the features and advantages will be readily apparent from this specification or be understood by implementing this application.

### BRIEF DESCRIPTION OF THE DRAWINGS

The accompanying drawings are used to provide a further understanding of this application and constitute a part of this specification. The accompanying drawings together with the embodiments of this application are used to explain this application and do not constitute a limitation on this application. In the drawings:
FIG. 1 is a schematic diagram of a layout of a warehousing system with an existing four-way shuttle dense storage system;
FIG. 2 is a schematic diagram of a layout of a four-way shuttle dense storage system solution without a conveyor line according to this application;
FIG. 3 is a schematic diagram of a detailed layout of an inbound and outbound docking solution according to this application;
FIG. 4 is a schematic diagram of a vertical two-way shuttle, a four-way shuttle, a pallet, and goods in a rack according to this application;

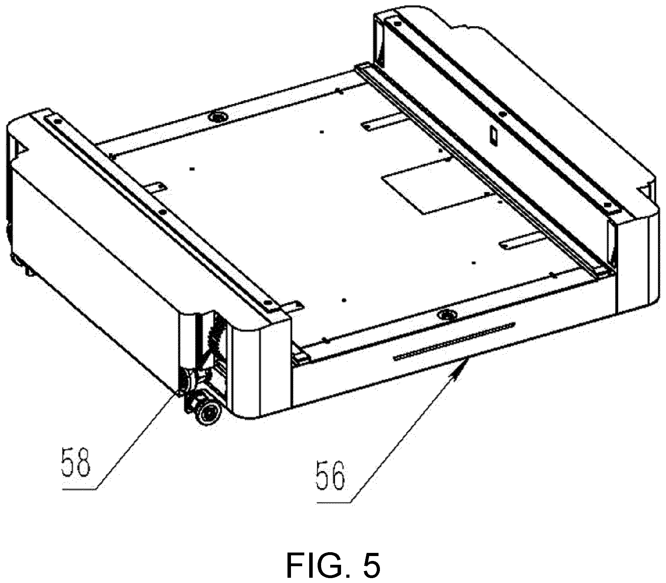

FIG. 5 is a diagram of a gear layout of a vertical two-way shuttle according to this application;
FIG. 6 is a schematic diagram of a meshing relationship between a gear and a toothed bar in a vertical two-way shuttle according to this application; and
FIG. 7 is installation, implementation, and delivery processes of equipment during project implementation.

In the figures: 1: inbound port; 2: inbound buffer position; 3: another buffer position; 4: vertical two-way shuttle on an inbound side; 5: vertical two-way shuttle on an outbound side; 6: outbound buffer position; 7: another buffer position; 8: outbound port; 11: four-way shuttle; 21: conveyor line inbound port; 22: common elevator; 23: inbound docking conveyor line; 24: outbound docking conveyor line; 25: common elevator; 26: conveyor line outbound port; 31: AGV docking inbound port; 32: AGV docking outbound port; 51: rack column plate; 52: T-shaped track; 53: toothed bar; 54: goods; 55: pallet; 56: vertical two-way shuttle; and 57: four-way shuttle.

### DESCRIPTION OF THE EMBODIMENTS

To make the objectives and technical solutions of the embodiments of this application clearer, the following describes the technical solutions in the embodiments of this application clearly and comprehensively with reference to the accompanying drawings in the embodiments of this application. Clearly, the described embodiments are some rather than all of the embodiments of this application. All other embodiments obtained by a person of ordinary skill in the art-based, the described embodiments of this application without creative efforts shall fall within the protection scope of this application.

A person skilled in the art may understand that, unless otherwise defined, all terms (including technical terms and scientific terms) used herein have the same meanings as those generally understood by a person of ordinary skill in the art to which this application belongs. It should be further understood that terms such as those defined in a general-purpose dictionary shall be construed as having meanings consistent with those in the context of the conventional technologies, and shall not be interpreted as idealized or excessively formal meanings unless otherwise defined herein.

In this application, "and/or" means that either of the listed elements may exist alone or both of the elements may exist, where both cases are encompassed herein.

In this application, the meanings of "in" and "out" shall be understood relative to warehousing space itself, where a direction from a truck unloading zone or a loading zone driveway to a storage position in a three-dimensional rack inside the warehousing space is denoted as "in", and an opposite direction is denoted as "out". These meanings are not specific limitations on an apparatus mechanism in this application.

In this application, the meaning of "connection" may be a direct connection between components or may be an indirect connection between components through another component.

In this application, the meanings of "up" and "down" are defined as follows: When a user is facing a three-dimensional rack, a direction from the ground to a storage position at the top of the three-dimensional rack is denoted as "up", and an opposite direction is denoted as "down". These meanings are not specific limitations on an apparatus mechanism in this application.

In this application, an inbound buffer position and an outbound buffer position are arranged in front of a warehouse, a four-way shuttle is used to implement goods exchanges between a vertical two-way shuttle and each of the inbound and outbound ports, and the vertical two-way shuttle is used to carry the goods to a corresponding tier, thereby implementing automatic warehousing of a dense storage system. In this application, a highly flexible four-way shuttle is used to replace a conventional pallet conveyor line, and a vertical two-way shuttle is used to replace a conventional elevator. In one aspect, problems of cumbersome conveyor line installation and a complex electronic control design in a conventional four-way shuttle solution can be effectively solved; and in another aspect, a problem of how to carry goods to a lifting apparatus for cross-tier transfer can be further solved by using a vertical two-way shuttle. By utilizing a characteristic of high flexibility of a robot product, devices can be added or removed based on a customer efficiency requirement, so as to meet an operation need. Depending on order characteristics, a plurality of buffer positions may be optionally arranged in front of a warehouse to efficiently handle centralized inbound and outbound operations. When a customer requirement is changed and a logistics flow line is adjusted, the solution without a conveyor line enables timely adjustment and fast deployment to solve the problems and pain points in a conventional four-way shuttle solution with a conveyor line. This application features low costs, high efficiency, high density, high flexibility, fast project delivery, and easy operation and maintenance.

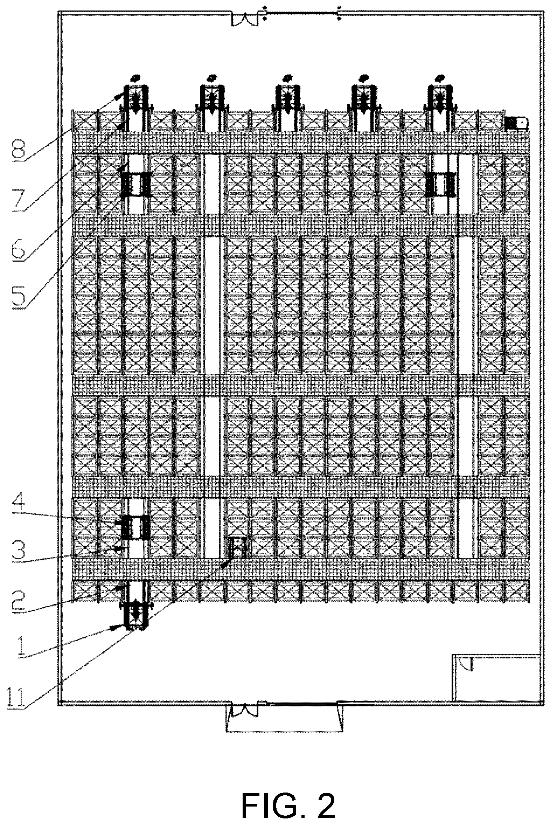

FIG. 2 shows a warehousing system with a four-way shuttle dense storage system without a conveyor line according to this application. The warehousing system includes:
an inbound port 1, arranged at a position, in warehousing space, adjacent to incoming materials for inbound processing, where a handheld terminal is provided in the inbound area so that a warehouse keeper scans a code of a goods pallet and a material code of various types of goods by using the handheld terminal, and binds the pallet code with the material code, thereby implementing binding of inbound information and carrying the goods to the inbound port 1 to trigger an inbound task;
an inbound buffer position 2, arranged near the inbound port 1, and configured to buffer the materials for inbound processing;
a dense storage system rack with a four-way shuttle, arranged in the warehousing space in high density, so as to form a warehousing array in the middle of the warehousing space to store goods that have been scanned at an inbound position for inbound processing;
a vertical two-way shuttle 4/5, arranged inside the dense storage system rack or at any position at a rack end, and configured to implement up-and-down tier switching of goods and a four-way shuttle;
another buffer position 3/6, arranged near the vertical two-way shuttle, and configured to buffer goods from or to the vertical two-way shuttle;
an outbound buffer position 7, arranged near an inbound port 8, and configured to buffer materials for outbound processing; and
the outbound port 8, is arranged at a position, in the warehousing space, adjacent to a material outbound delivery path, where a handheld terminal is provided in the outbound area, so that a warehouse keeper scans a code of a goods pallet by using the handheld terminal to implement outbound processing for goods; and the outbound port may be configured to implement outbound processing for palletized materials or implement pick-and-outbound processing for to-be-picked goods.

After receiving goods for inbound processing, the system executes an inbound process based on the following steps:
First, an operator scans a code of a goods pallet and a material code of various types of goods by using a handheld terminal, and binds the pallet code with the material code. Then, goods with information binding completed in an inbound buffer zone are carried to the inbound port 1 for inbound operations.

A four-way shuttle 11 reaches the inbound port 1 to carry the goods for inbound processing. The system automatically assigns a position to the goods after weighting, code scanning, and dimensional inspection are performed without errors found. If the assigned position is located at the first tier, the four-way shuttle 11 retrieves the goods from the inbound port and transfers the goods to a designated storage position at the first tier of the dense storage rack for storage. If a tier of a position assigned to the goods is an upper tier of the rack, the system first schedules a four-way shuttle at the first tier of the dense storage system rack to retrieve the goods from the inbound port 1 and carry the goods to the vertical two-way shuttle 4. After the vertical two-way shuttle lifts the goods to the designated tier of the rack, a four-way shuttle at the corresponding tier then carries the goods to a designated storage position in the dense storage rack for storage.

Corresponding to the inbound process, the foregoing warehousing system further schedules a four-way shuttle to implement outbound processing for various types of goods in the dense storage system rack based on the following steps:
First, if the goods for outbound processing are located at an upper tier of the dense storage system rack, the system schedules a four-way shuttle 11 running at a storage tier corresponding to the goods in the dense storage system rack to retrieve the goods from a storage position of the goods and transfer the goods to the vertical two-way shuttle 5, so that the vertical two-way shuttle lifts the goods to the first rack tier, and a four-way shuttle at the first tier carries the goods to the outbound port 8. If the goods for outbound processing are located at the first rack tier, the system directly schedules the four-way shuttle at the first tier to retrieve the goods from a storage position of the goods and transfer the goods to the outbound port 8. The goods at the outbound port 8 are manually carried away to complete the outbound processing.

The foregoing system may further adjust a goods inbound and outbound policy based on a device quantity and a use efficiency requirement of a project. When a device quantity is relatively small and an efficiency requirement is lowered, goods may be carried based on the following method for moving up and down the rack, to execute inbound and outbound operations.

Specifically, during an inbound process:
If a tier of a position assigned to the goods is an upper tier of the rack, the system first schedules a four-way shuttle 11 at the first tier of the dense storage system rack to retrieve the goods from the inbound port 1 and carry the goods to the vertical two-way shuttle 4. If there is no idle four-way shuttle at the first rack tier, an idle four-way shuttle at an upper tier is first scheduled to reach the first rack tier through a vertical two-way shuttle 4 after tier switching, and then the four-way shuttle is used to retrieve the goods from the inbound port 1 and carry the goods to the vertical two-way shuttle 4. After the four-way shuttle and the goods both reach a designated tier corresponding to an assigned position through tier switching, the current four-way shuttle directly carries the goods out of the vertical two-way shuttle 4, and transfers the goods to the designated storage position in the dense storage rack for storage.

During an outbound process:
If the goods for outbound processing are located at an upper tier of the dense storage system rack, the system preferentially schedules a four-way shuttle 11 running at a storage tier corresponding to the goods in the dense storage system rack to retrieve the goods from a storage position of the goods and transfer the goods to the vertical two-way shuttle 5. If there is no idle four-way shuttle at the tier, an idle four-way shuttle at another tier is first scheduled to reach the tier through transfer by the vertical two-way shuttle 5, and then the four-way shuttle retrieves the goods and transfers the goods to the vertical two-way shuttle 5. Then, the vertical two-way shuttle is used to lower the goods together with the four-way shuttle to the first rack tier, so that the current four-way shuttle carries the goods to the outbound port 8.

When picking operations need to be performed on the goods during outbound processing:
The to-be-picked goods reach the outbound port 8 through the foregoing outbound process, and are manually retrieved from a pallet at the outbound port 8 to complete the picking operations and additionally trigger a task to return the remaining goods in the pallet. The pallet is transferred by the four-way shuttle in cooperation with the vertical two-way shuttle to a designated storage position in the dense storage rack again for storage.

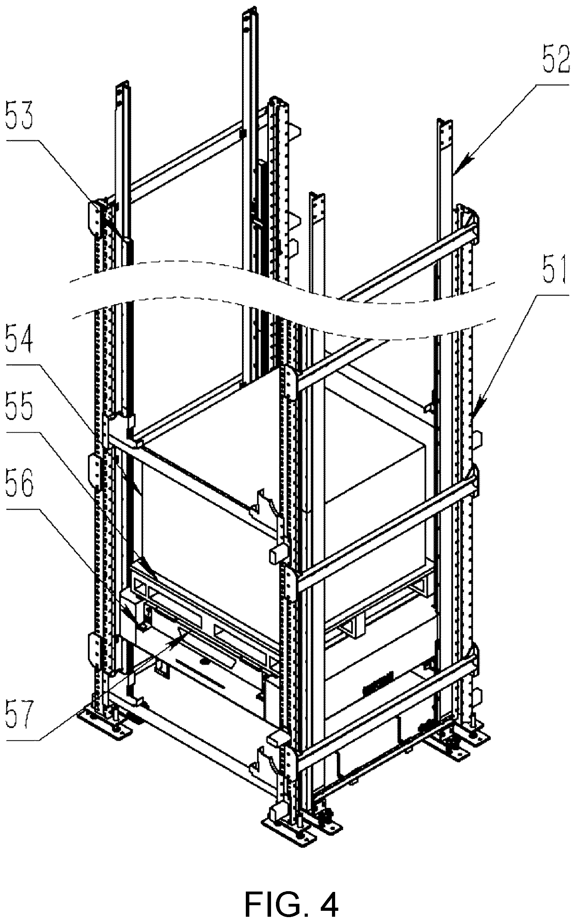

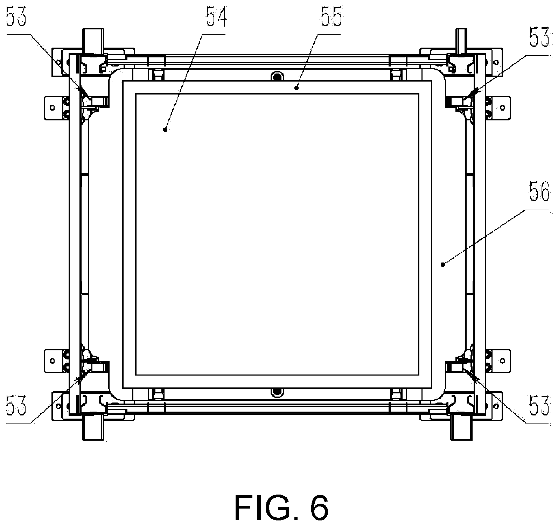

In the foregoing system, the vertical two-way shuttle functions as a lifter. Referring to FIG. 4, a throughgoing groove structure that allows a four-way shuttle and goods to pass through is arranged on each of the front and back sides of the vertical two-way shuttle, so that in-and-out transportation of goods can be implemented by relying on the four-way shuttle. Specifically, on the inner side of the rack, the vertical two-way shuttle in this application is provided with T-shaped tracks 52 and toothed bars 53 that are configured to lift or lower a device. Referring to FIG. 6, on two sides of its shuttle body, the vertical two-way shuttle 56 of this application is correspondingly provided with gears meshed with the toothed bars. After the gears and the toothed bars on the vertical two-way shuttle are meshed with each other, rotation of the gears on the shuttle body drives the vertical two-way shuttle to run along the toothed bars, thereby implementing up and down movement in a vertical direction. With the throughgoing groove structure in the middle of its shuttle body, the two-way shuttle allows the four-way shuttle 57 to get in and out along the track, and enables the four-way shuttle to carry a pallet 55 to transfer goods 54. The vertical two-way shuttle allows the four-way shuttle 57 to get in and out to receive goods loaded on the pallet on the vertical two-way shuttle. After the four-way shuttle and the goods reach a target docking tier through tier switching, the four-way shuttle can move into the three-dimensional rack along the tracks interconnected to a front end or to a back end of the vertical two-way shuttle, thereby implementing transference of the goods.

When a corresponding device is scheduled, this system needs to rely on the cooperation of different devices to implement each inbound or outbound transfer operation. Considering the differences in the running time periods required for different devices, a device that gets in place quickly needs to wait for a slow device. As a result, device efficiency is degraded. Therefore, a four-way shuttle at a corresponding tier may be scheduled during tier switching of a vertical two-way shuttle, or a vertical two-way shuttle may be combined with a four-way shuttle to form a six-way shuttle mode, so that the four-way shuttle can carry goods in advance during the tier switching, and can wait at a corresponding docking position of the vertical two-way shuttle in advance. After the two-way shuttle reaches the corresponding tier, the four-way shuttle directly lifts the goods to be hoisted and carry the goods into the two-way shuttle, thereby implementing goods takeover and transfer.

Specifically, during solution design, if a project needs continuous inbound and outbound operations, to ensure maximum system efficiency and prevent a vertical two-way shuttle from waiting for goods or a four-way shuttle from waiting for a vertical two-way shuttle, the inbound buffer position 2 may be arranged at a front end of the inbound port 1, another buffer position 3 may be arranged at a front end of the vertical two-way shuttle 4, an outbound buffer position 7 may be arranged in front of the outbound port 8, and another buffer position 6 may be arranged at a front end of the vertical two-way shuttle 5. In this case, in the inbound area, when the vertical two-way shuttle 4 is executing a current task, three task waiting positions, namely, the another buffer position 3, the inbound buffer position 2, and the inbound port 1 may be used to ensure maximum system efficiency. In this solution, the system carries the goods based on the following method for moving up and down the rack, to execute inbound and outbound operations.

During an inbound process:
If a tier of a position assigned to the goods is an upper tier of the rack, the system first schedules a four-way shuttle for docking at the first tier of the dense storage system rack to retrieve the goods from the inbound port 1 and carry the goods to the another buffer position 3. When a next inbound task is initiated, if materials at the another buffer position 3 have not entered the vertical two-way shuttle 4, the four-way shuttle for docking at the first tier retrieves goods from the inbound port 1 and carries the goods to the inbound port buffer position 2. After the vertical two-way shuttle is in place, the four-way shuttle for docking at the first tier or a four-way shuttle inside the vertical two-way shuttle carries the goods from the another buffer position 3 to the vertical two-way shuttle 4. After the vertical two-way shuttle 4 lifts the goods for inbound processing to a designated rack tier, the four-way shuttle transfers the goods to a designated storage position in the dense storage rack for storage, thereby completing the inbound operation task. In addition, after the another buffer position 3 is released, the four-way shuttle for docking at the first tier may continue to carry the goods at the inbound port buffer position 2 to the another buffer position 3, and then carry the goods at the inbound port 1 to the inbound port buffer position 2, so as to avoid mutual waiting between the goods and the vertical two-way vehicle by transferring the goods between the buffer positions, thereby implementing highly efficient and continuous inbound operations for inbound materials.

During an outbound process:
If the goods for outbound processing are located at an upper tier of the dense storage system rack, the system schedules a four-way shuttle 11 running at a storage tier corresponding to the goods in the dense storage system rack to retrieve the goods from a storage position for the goods and to transfer the goods to the another buffer position 6 in front of the vertical two-way shuttle 5. After the vertical two-way shuttle is in place, a four-way shuttle at a current tier or a four-way shuttle inside the vertical two-way shuttle 5 carries the goods into the vertical two-way shuttle 5. After the vertical two-way shuttle lifts the goods to the first rack tier, the four-way shuttle finally carries the goods to the outbound port 8. If goods of a previous outbound task have not been manually carried away, the four-way shuttle first carries the goods to the outbound port buffer position 7, and after the outbound port 8 is released, the four-way shuttle for docking at the first tier carries the materials for outbound processing at the outbound port buffer position to the outbound port 8, thereby implementing automatic outbound operations for the goods.

This operation mode can cope with a continuous inbound scenario or a high-efficiency scenario, to ensure that the two-way shuttles and all the four-way shuttles are all in a moving state. Docking positions designed at a front end and a back end herein can enable goods to be carried in a relay mode, thereby ensuring that the devices are always in an operation state, and ensuring maximum system efficiency.

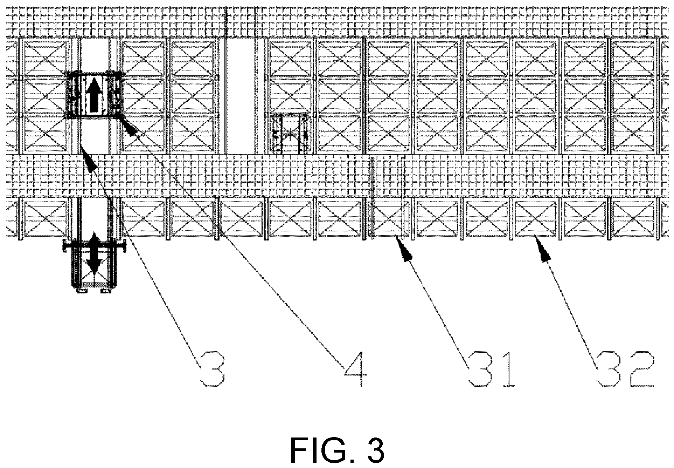

In specific applications, the inbound and outbound ports may be docked with manual forklifts, and additionally, an AGV docking position may further be directly arranged at a rack end, as shown in FIG. 3. In this solution, the system carries the goods based on the following method for moving up and down the rack, to execute inbound and outbound operations.

During an inbound process:
An AGV carries goods for inbound processing to an AGV docking inbound port 31. The AGV may be directly docked with a position at a rack end in the four-way shuttle dense storage system, and place the inbound goods to the inbound port 31. After the AGV leaves, the system calls a four-way shuttle. The four-way shuttle reaches the AGV docking inbound port 31 to carry the goods for inbound actions. The system automatically assigns a position to the goods after code scanning and dimensional inspection are performed without errors found. According to the content in the four-way shuttle dense storage system solution without a conveyor line, the inbound goods are carried to a designated storage position in the dense storage rack for storage.

During an outbound process:
According to the content in the four-way shuttle dense storage system solution without a conveyor line, the goods for outbound processing are carried from a storage position to the first rack tier. A four-way shuttle carries the materials and places them at an AGV docking outbound port 32. An AGV carries the goods away from the outbound port 32, thereby completing outbound operations.

The AGV docking inbound or outbound port 31/32 and the inbound or outbound port 1/8 have different frame structures. An independent material rack structure needs to be added between the inbound port 1 and the outbound port 8. The AGV docking inbound port 31 and the AGV docking outbound port 32 may directly use a structure of a rack end in the dense storage system to implement goods placement and carry. Therefore, during solution planning and project implementation, positions of rack ends in the four-way shuttle dense storage system may all be used as AGV inbound and outbound ports to implement docking between an AGV and a four-way shuttle, thereby implementing inbound and outbound functions of a warehouse. As there are many positions of rack ends, during inbound and outbound operations, the system may schedule a four-way shuttle and an AGV device to implement the inbound and outbound operations along a shortest path, thereby greatly improving warehousing operation efficiency. The positions of the rack ends may also be used as inbound and outbound buffer positions, to implement warehouse functions such as early goods preparation and centralized inbound and outbound processing, thereby effectively solving a problem of a warehouse efficiency bottleneck.

In the foregoing four-way shuttle dense storage system solution without a conveyor line, a vertical two-way shuttle is used to replace a conventional elevator, and a four-way shuttle is used to replace a conventional conveyor line for operations in this design. In addition, an RMS system is used to implement efficient scheduling of a warehousing robot in a warehouse, and a WMS system is used to manage and update an inbound and outbound storage status and a storage position of goods. In the foregoing system, the vertical two-way shuttle is combined with the four-way shuttle device to provide a new four-way shuttle dense storage system solution without a conveyor line, so that goods are automatically carried in six directions in a warehouse. The foregoing solution can make full use of an existing site of a factory building, increase a storage density of a warehouse, reduce manual installation workload in an implementation phase, and reduce project construction costs. With the high flexibility of the solution without a conveyor line, locations and quantities of inbound and outbound ports can be adjusted based on a change in a logistics requirement, and quantities of vertical two-way shuttles and four-way shuttles can also be adjusted based on a change in an efficiency requirement, thereby realizing scalability of a warehouse.

The following compares the four-way shuttle dense storage system solution without a conveyor line with an existing solution.

In a same area and based on same inbound and outbound requirements and a same efficiency requirement, a conventional solution is as shown in FIG. 1, and the four-way shuttle dense storage system solution without a conveyor line is as shown in FIG. 2. In the two solutions, the overall occupation areas of warehouses are the same. Heights of two four-way shuttle dense storage system areas are both calculated based on a four-tier rack design. The following table describes a comparison of the solutions:

**Table 1: Comparison between the four-way shuttle dense storage system solution without a conveyor line and the existing solution**

| | | Conventional four-way shuttle dense storage system solution | Four-way shuttle dense storage system solution without a conveyor line |
|---|---|---|---|
| 1 | Warehouse area (m²) | 1060 | 1060 |
| 2 | Storage space (m³) | 8320 | 8320 |
| 3 | Quantity of main aisles | 5 | 5 |
| 4 | Quantity of positions | 1064 | 1168 |
| 5 | Warehousing density (%) | 30.69 | 33.69 |

Both the four-way shuttle dense storage system solution without a conveyor line and the conventional four-way shuttle dense storage system solution are provided on the condition that warehousing spaces of the same volume from the same factory building are used to ensure that spaces, stored goods specifications, quantities of main aisles in a dense storage system rack, and quantities of SKUs available in the system are basically the same for the two solutions, as described in the foregoing table. According to the comparison of the two solutions, apparently, a quantity of warehousing positions of this application is 104 more than that of the conventional solution, the quantity of positions is increased by 9.7%, and an overall warehousing density of the warehouse is increased by 3%. In addition, with respect to the solutions, quantities of inbound buffer positions and outbound buffer positions in this application are much greater than those of the conventional solution. Therefore, according to the comparison of the storage densities of the two solutions, the solution of this application is significantly superior to the existing conventional solution.

This application is significantly more economical than the conventional four-way shuttle dense storage system solution. In this application, conveyor line equipment is omitted at the inbound and outbound ports, inside an elevator, and at docking positions between an elevating device and a four-way shuttle, and a vertical two-way shuttle is used to replace a conventional elevator. In a project design phase, in this application, no participation from conveyor line structural design personnel and conveyance, elevation, and electrical control research and development personnel is needed, thereby reducing manual labor costs for technology research and development. In a project implementation phase, in this application, no participation from conveyor and elevator mechanical installation personnel and electrical wiring personnel is needed, thereby reducing manual labor costs for implementation and operations. In a system commissioning and software development phase, in this application, a unified interface is used for interworking with an automation device in the warehouse, and only one RMS scheduling system is used for the device in the warehouse to control all robotic devices, thereby reducing manual labor costs for software. In addition, the vertical two-way shuttle used in this application has a compact structure and occupies only a single position. The vertical two-way shuttle uses a rack column as its main support member, leading to a significant reduction in production and processing costs compared with a conventional elevator. During project implementation and installation, the device is lightweight, highly integrated, and easy to install. Therefore, this application is significantly economical and can reduce construction costs for a dense storage system.

This application features high efficiency. For cooperative use of a four-way shuttle dense storage system and an AGV in the conventional solution, both the four-way shuttle and the AGV device need to carry goods to an elevator during inbound and outbound processing in order to implement the inbound and outbound functions. A running path of the device is long, and an operation process is time-consuming. For cooperative use with an AGV in this application, due to a characteristic of the dense storage system rack, all rack ends can be used as inbound and output ports, and therefore moving paths of the four-way shuttle and the AGV can be optimized. The four-way shuttle or the AGV device may select the shortest path during operations to implement fast inbound and outbound functions for goods. During operations, a single operation process of a device consumes less time, and a single device carries more pallets within a unit of time, thereby improving overall operation efficiency.

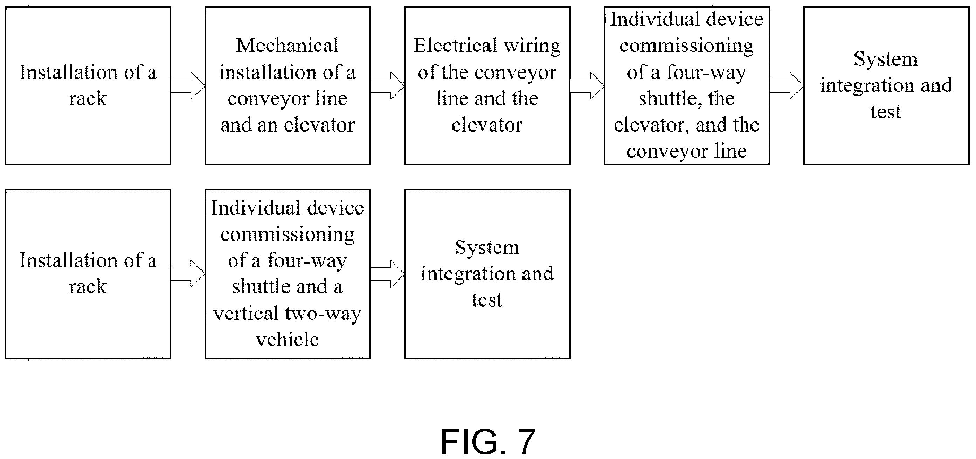

This application features a short project implementation period and fast project delivery. In this application, a vertical two-way shuttle is combined with a four-way shuttle to totally remove a conveyor line and an elevator in the conventional solution, and the system can directly implement scheduling of the vertical two-way shuttle and the four-way shuttle by using the RMS system, thereby completing inbound and outbound tasks for goods. FIG. 7 shows installation, implementation, and project delivery of equipment during project implementation.

It is clear from the comparison that, compared with the conventional four-way shuttle dense storage system solution, in this application, processes of mechanical installation of a conveyor line and an elevator, electrical wiring of the conveyor line and the elevator, and individual device commissioning of the conveyor line are omitted during implementation. In this application, on-site installation workload is light, no participation from conveyor line mechanical installation personnel and electrical wiring personnel is needed, and an overall implementation period is shorter.

This application features high scalability. In the conventional solution, once a conveyor line is implemented, a conveyance direction, quantities of inbound and outbound ports, and system efficiency are all limited by existing conveyor equipment. It is difficult to improve efficiency or change a logistics flow line by simply adding a conveyor device in a later phase. When a customer requirement is changed, modification of an old warehouse often generates high economic costs. The vertical two-way shuttle and the four-way shuttle each are a flexible individual device. Each device can independently complete its tasks, thereby featuring high flexibility and achieving mutual flexible cooperation through system scheduling. Therefore, with the warehousing system provided in this application, a customer can add devices based on a change in a customer service requirement, so as to adapt to the latest customer requirement. During warehouse modification, efficiency can be improved or a logistics flow line can be changed simply by adjusting hardware and corresponding software logic.

In conclusion, this application provides a new four-way shuttle dense storage system solution without a conveyor line. In this solution, a new vertical two-way shuttle is utilized, which uses a rack column as a main bearing member to implement up-and-down movements in a single slot, thereby carrying out a tier switching function for palletized goods and a four-way shuttle in vertical space of a dense storage system. In this solution, the vertical two-way shuttle may be flexibly arranged inside a dense storage system rack or at any position inside a warehouse such as a sub-aisle end in the dense storage system rack. In horizontal space, a groove structure on a body of the vertical two-way shuttle is directly connected to a rack subtrack to guide the four-way shuttle, so that the four-way shuttle can get in and out of the vertical two-way shuttle freely, thereby implementing automatic inbound and outbound functions for palletized goods. Instead of using a conveyor line as a device for transferring or moving materials during inbound and outbound processing, in this solution, the highly flexible four-way shuttle is used to implement direct docking with inbound and outbound positions and implement dense storage without a conveyor line in a warehouse. In this application, the conveyor line-free solution design with a vertical two-way shuttle combined with a four-way shuttle is used. It not only omits on-site installation, electrical wiring, and electrical control commissioning of conveyor equipment, but also simplifies an on-site implementation process and work of implementation personnel, thereby effectively reducing project implementation costs and shortening an implementation period. In this solution design, the vertical two-way shuttle is used to replace a conventional elevator. It occupies space of only a single position, and can make full use of warehouse space, and therefore can effectively increase a quantity of storage positions and greatly reduce production and installation costs. In a warehouse with this solution design, all automation devices are robotic devices to implement the automatic inbound and outbound functions for goods, and only one suite of RMS software is used to schedule all the automation devices, so that the warehouse is smarter and the system is simpler. Therefore, by using the dense storage system solution without a conveyor line in this application, a density in an automated warehouse can be increased and warehousing flexibility can be improved while construction costs of the automated warehouse are reduced, a construction period thereof is shortened, and difficulty in project delivery and operation and maintenance can be reduced.

## Claims

1. A scheduling method for a four-way shuttle dense storage system without a conveyor line, wherein inbound steps comprise:
when goods are carried to an inbound port (1), scheduling a four-way shuttle (11) to carry the goods at the inbound port (1) onto a vertical two-way shuttle (4) in a dense storage system, so that the vertical two-way shuttle (4) lifts the goods to a designated tier of a storage rack; and
scheduling a four-way shuttle (11) at the corresponding tier of a dense storage system rack to retrieve the goods conveyed by the vertical two-way shuttle (4), and transferring the goods to a designated storage position in the dense storage system rack; and
outbound steps comprise:
scheduling a four-way shuttle (11) running at a storage tier corresponding to target goods in the dense storage system rack to retrieve the goods from a storage position of the goods, and transferring the goods to the vertical two-way shuttle (5), so that the vertical two-way shuttle transfers the goods to a first rack tier; and
scheduling a four-way shuttle at the first rack tier to retrieve the goods conveyed by the vertical two-way shuttle, and carrying the goods to an outbound port (8) for manual outbound processing.

2. The scheduling method for the four-way shuttle dense storage system without the conveyor line according to claim 1, wherein before the goods for inbound processing are carried to the inbound port (1), the method further comprises: scanning a code of a pallet for the goods and a material code of the goods, and binding a pallet code with the material code.

3. The scheduling method for the four-way shuttle dense storage system without the conveyor line according to claim 2, wherein when the goods are carried to the inbound port (1), the goods are placed on a material rack at the inbound port (1); and the material rack at the inbound port (1) is independent of the rack; and
the material rack is independent of the rack, and the material rack is further provided with a material rack subtrack interconnected with a subtrack in the rack, and the four-way shuttle (11) is capable of running between the subtrack of the rack and the material rack subtrack.

4. The scheduling method for the four-way shuttle dense storage system without the conveyor line according to claim 3, wherein after being carried to the material rack at the inbound port (1), the goods are lifted and carried away from the inbound port (1) by the four-way shuttle (11), and are assigned a corresponding storage position after weighting, code scanning, and dimensional inspection; and
if the assigned storage position is located at a first tier at the bottom of the rack, the four-way shuttle (11) at the first tier of the rack is directly driven to carry the goods to the storage position; or
if the assigned storage position is above the first tier of the rack, the four-way shuttle (11) at the first tier of the rack is firstly driven to carry the goods to the vertical two-way shuttle (4), then the vertical two-way shuttle lifts and carries the goods to a corresponding tier, and finally a four-way shuttle at the corresponding tier carries the goods to the storage position.

5. The scheduling method for the four-way shuttle dense storage system without the conveyor line according to claim 4, wherein when continuous inbound processing is needed for the goods, the four-way shuttle (11) at the first tier is driven to continuously carry the goods for inbound processing from the inbound port (1) to an inbound buffer position (3) between the inbound port (1) and the vertical two-way shuttle (4), and after the vertical two-way shuttle reaches the first tier, a four-way shuttle inside the vertical two-way shuttle carries the goods to the vertical two-way shuttle.

6. The scheduling method for the four-way shuttle dense storage system without the conveyor line according to claim 1, wherein if the goods for outbound processing are located at a first tier of the rack, the four-way shuttle at the first tier of the rack is directly driven to carry the goods directly from the corresponding storage position to the outbound port (8); or
if the goods for outbound processing are above the first tier of the rack, the four-way shuttle at the tier is first driven to carry the goods from the storage position to the vertical two-way shuttle (5), the vertical two-way shuttle carries and lowers the goods to the first tier of the rack, and the four-way shuttle (11) at the first tier carries the goods to the outbound port (8).

7. The scheduling method for the four-way shuttle dense storage system without the conveyor line according to claim 6, wherein when continuous outbound processing is needed for the goods, the four-way shuttle (11) in the vertical two-way shuttle (5) is driven to carry the goods from the vertical two-way shuttle (5) to an outbound buffer position (6), and after the outbound port (8) is released, the four-way shuttle at the first tier carries the goods in the outbound buffer position to the outbound port (8).

8. The scheduling method for the four-way shuttle dense storage system without the conveyor line according to claim 1, wherein when picking for outbound processing is needed, the goods are firstly carried to the outbound port (8) for manual packing, and after the picking is complete, the inbound steps are executed reversely at the outbound port; wherein
the outbound port (8) used for picking is a position extending outwardly from a first tier of the rack or a travel path extending outwardly from a main aisle.

9. A warehousing system, comprising:
a rack, wherein the rack is provided with a plurality of tiers of storage positions, and the storage positions are connected by using a track;
the inbound port (1), configured to receive the goods for execution of the inbound steps according to claim 1;
the outbound port (8), configured to receive the goods for execution of the outbound steps according to claim 1;
vertical two-way shuttles, configured to lift or lower the goods and four-way shuttles to a designated tier of the rack; and
the four-way shuttles, distributed at the tiers of the rack and configured to carry the goods between the inbound port (1), the vertical two-way shuttles, the outbound port (8), and the storage positions.

10. The warehousing system according to claim 9, further comprising:
a material rack, wherein the material rack is independent of the rack and is provided with a material rack subtrack interconnected with a subtrack in the rack, and the four-way shuttle (11) is capable of running between the subtrack of the rack and the material rack subtrack to execute at least one of the inbound steps and the outbound steps;
an inbound buffer position (3), disposed between the inbound port (1) and the vertical two-way shuttle (4), and configured to receive the goods for inbound processing that are input from the inbound port (1), so that after the vertical two-way shuttle reaches a first tier, a four-way shuttle inside the vertical two-way shuttle carries the goods to the vertical two-way shuttle; and
an outbound buffer position (6), disposed between the vertical two-way shuttle (5) and the outbound port (8), and configured to receive the goods output by the vertical two-way shuttle (5), so that after the outbound port (8) is released, a four-way shuttle at the first tier carries the goods in the outbound buffer position to the outbound port (8).
